# EUROPEAN PATENT SPECIFICATION

(11) **EP 1 805 860 B1**
(45) Date of publication and mention of the grant of the patent: **28.12.2011**
(21) Application number: 05795419.0
(22) Date of filing: 12.09.2005
(51) Int. Cl.: H02H 3/00, B60R 1/08

(54) **MIRROR CONTROL SYSTEM**
SPIEGELSTEUERSYSTEM
SYSTEME DE COMMANDE DE MIROIR

(30) Priority: 13.09.2004 US 939985
(43) Date of publication of application: 11.07.2007
(73) Proprietor: Gentex Corporation, Zeeland, Michigan 49464 (US)
(72) Inventor: TURNBULL, Robert R., Holland, Michigan 49424 (US); POE, G., Bruce, Hamilton, Michigan 49419 (US); FRIEND, Timothy R., Grandville, Michigan 49418 (US); MART, Gregory A., Zeeland, Michigan 49464 (US); MEEKHOF, David A., Grand Rapids, Michigan 49504 (US)
(74) Representative: Müller-Boré & Partner Patentanwälte
(86) International application number: PCT/US2005/032367
(87) International publication number: WO 2006/031709

(56) References cited:
- EP-A1- 0 492 591
- WO-A2-02/17008
- US-A- 5 159 516
- US-A1- 2003 234 752
- US-A1- 2005 073 786

## Description

### BACKGROUND OF THE INVENTION

The present invention is generally directed to a mirror control system with fault protection and, more specifically, to a mirror control system for use with an electro-optic element, such as an electrochromic element.

Document US 2003/0234752 A1 which represents the prior art as referred to in the preamble of claim 1 discloses a drive control circuit for controlling an electrochromic element which is substantially integrated into an integrated circuit, with the exception of resistive elements for dissipating heat away from the integrated circuit. The drive control circuit includes a current regulator for generating a select one of at least two discrete amounts of current to drive the electrochromic element. Further, a control system individually controls a plurality of electrochromic elements and includes shunts coupled in parallel with the individual electrochromic elements. The control system controls the ratio of the reflectance of the individual electrochromic elements as a function of sensed glare.

Document EP 0 492 591 A1 discloses an automatic rearview mirror system which is particularly adapted for use with automotive vehicles and which may be utilized as a fully integrated inside/outside rearview mirror system or as an inside or an outside rearview mirror system. The system includes a variable reflectance member the reflectivity of which varies as a function of an electrical signal applied thereto, and the system also includes means operable to apply an electrical signal to the variable reflectance member to vary the reflectivity of such member as a function of sensed ambient light and sensed glare causing light.

In various electronic circuits, it may be necessary or advantageous to monitor a current delivered by a drive circuit to a load so as to protect the load from over-current conditions. When a drive circuit receives its operating power from a power source whose output varies, e.g., an unregulated power supply, a drive current supplied by the drive circuit to a load will vary depending upon the voltage level of the power source. In situations where a series resistor is placed between a drive circuit and a load, to monitor the drive current supplied to the load, a monitoring circuit that monitors the voltage across the series resistor (to determine the current delivered to the load) may be unable to detect if the load is shorted when the output voltage level of the power source is at its lower extreme. This is due to the fact that circuits that have been used to monitor the voltage across the series resistor have had a fixed threshold, which has been set above a desired operating current. However, if the fixed threshold is set to a lower level, such as the current level that would be delivered to a load at the lower extreme output of a power source, false over-current indications may occur during normal operation.

As an example, in electrochromic (EC) vehicular rearview mirror assemblies, a drive circuit is provided, which varies the voltage across an EC element to vary the reflectivity of the mirror such that unwanted glare can be avoided or reduced. However, it is not uncommon for the power source that supplies the drive current to the drive circuit to vary from, for example, between nine and sixteen volts. As previously mentioned, when a series resistor is utilized for monitoring the current delivered to the load by the drive circuit, setting a fixed threshold to a nominal voltage, e.g., twelve and one-half volts, can prevent the monitoring circuit from detecting short circuits at the load at the lower voltage extreme when the fixed threshold is set above the value that can be achieved at the lower voltage.

Thus, what is needed is a current sense circuit with a variable threshold that is capable of tracking variations in a power source output level.

### SUMMARY OF THE INVENTION

An embodiment of the present invention comprises a current sense circuit that includes a current sense device and a voltage sense device. The current sense device is positioned to sense a drive current provided to a load by a drive circuit. The voltage sense device is coupled across the current sense device and receives a variable threshold signal at a first input and provides an output signal on an output whose value is dependent upon whether a sense signal at a second input is above or below the variable threshold signal whose level changes in response to a voltage level of a power supply that supplies the drive current to the drive circuit. In one embodiment, the load is an electrochromic element. In another embodiment, the current sense device is a resistor. In still another embodiment, the voltage sense device is a differential amplifier. In another embodiment, the output of the voltage sense device is coupled to an input of a control unit that controls a level of the drive current provided by the drive circuit in response to the output signal.

These and other features, advantages and objects of the present invention will be further understood and appreciated by those skilled in the art by reference to the following specification, claims and appended drawings.

### BRIEF DESCRIPTION OF THE DRAWINGS

Fig. 1 is an electrical block diagram of a current sense circuit for monitoring a drive current supplied to a load by a drive circuit;

Fig. 2 is an electrical schematic of an exemplary current sense circuit, according to one embodiment of the present invention;

Fig. 3 is an exemplary electrical schematic of a current sense circuit, according to another embodiment of the present invention;

Fig. 4 is a graph depicting a load current as a function of an input voltage for the circuit of Fig. 2;

Fig. 5 is a graph depicting a load current as a function of an input voltage for the circuit of Fig. 3;

Fig. 6 depicts an element drive circuit with current sensing;

Fig. 7 depicts an element drive circuit with current sensing;

Fig. 8 depicts an element drive circuit with fault protection;

Fig. 9 depicts an element drive circuit with fault protection;

Fig. 10 depicts an element drive circuit with fault protection; and

Fig. 11 depicts an element drive circuit with fault protection and over voltage protection.

### DETAILED DESCRIPTION OF THE PREFERRED EMBODIMENTS

According to an embodiment of the present invention, a current sense circuit allows a short circuit at a load (e.g., an electrochromic element) to be detected even when an output of a power supply, that supplies power to a drive circuit, varies (e.g., from nine to sixteen volts). According to one embodiment, when a shorted load is detected, the current sense circuit provides an output to a control circuit that in response thereto provides a signal to the drive circuit, which causes, for example, the drive circuit to discontinue providing current to the load.

As will be apparent to those skilled in the art, certain aspects of the present invention may be implemented in vehicle accessories other than a mirror assembly, such as an overhead console, a visor, an A-pillar trim panel, an instrument panel, etc. With respect to those implementations, the discussion below relating to mirror assemblies is provided for purposes of example without otherwise limiting the scope of the invention as defined in the appended claims to such mirror assemblies. The present invention may also be used for non-automotive applications such as controlling an electrochromic filter or architectural window, or any other electro-optic or electrical device.

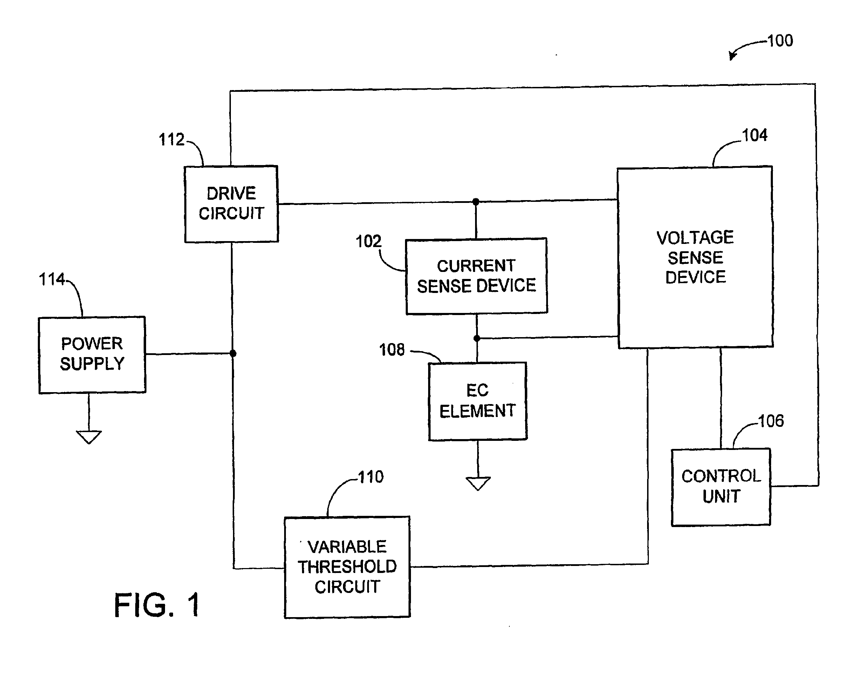

Turning to Fig. 1, an exemplary rearview mirror control system 100 includes a control unit 106 that is coupled to a voltage sense device 104 and a drive circuit 112. The drive circuit 112 is coupled to and receives power from a power supply 114, which may be an unregulated power supply. The drive circuit 112 is also coupled to a current sense device 102, which is coupled to a load, e.g., an electrochromic (EC) element 108. The power supply 114 is also coupled to a variable threshold circuit 110, which is coupled to the voltage sense device 104. The voltage sense device 104 is also coupled across the current sense device 102. It should be appreciated that the voltage sense device 104 may be coupled directly across the current sense device 102 or may be coupled across the current sense device 102 and additional components. In this case, the voltage added by the additional components may be readily removed when the impedance of the additional components is known.

The variable threshold circuit 110 provides a variable threshold signal to the voltage sense device 104 that varies as a function of the output voltage level of the power supply 114. That is, should the voltage level supplied by the power supply 114 decrease, the variable threshold circuit 110 provides a lower threshold signal to the voltage sense device 104. This allows the voltage sense device 104 to track variations in the power supply 114 such that short circuit conditions in the EC element 108 can be detected, when the output of the power supply 114 varies across a range of values. The control unit 106 may be a microcontroller, a microprocessor coupled to a memory subsystem, a field programmable gate array (FPGA), etc. In one embodiment, the current sense device 102 is a resistor that is placed in series between the drive circuit 112 and the EC element 108. In an embodiment, the voltage sense device 104 is an operational amplifier that is differentially coupled across the current sense device 102.

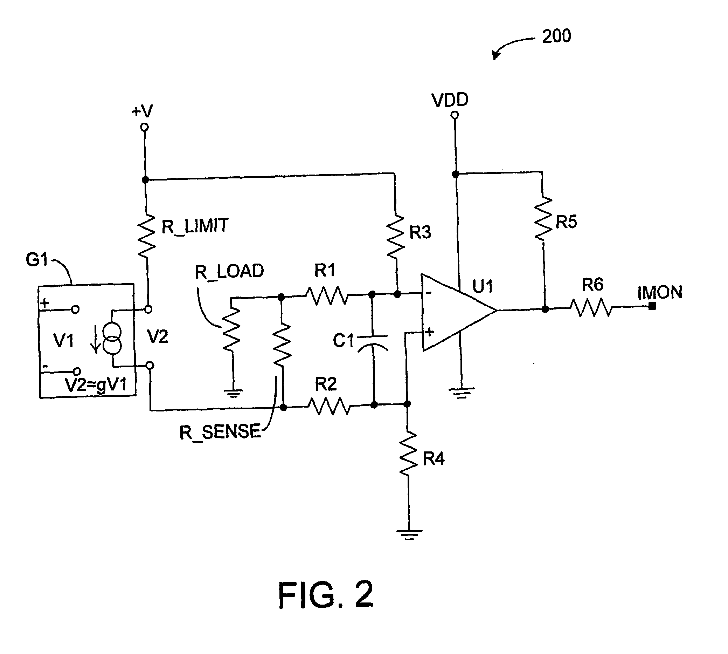

Fig. 2 depicts an electrical schematic of an exemplary current sense circuit 200, according to one embodiment of the present invention. As shown in Fig. 2, a first terminal of a drive circuit G1 is coupled to a power supply +V, through a current limiting resistor R_limit (e.g., 20 ohms). A second terminal of the drive circuit G1 is coupled to a resistive load R_load (e.g., 12 ohms), through a sense resistor R_sense (e.g., 0.33 ohms). A resistor R1 (e.g., 1 kohm) is coupled between a first side of the resistor R_sense and a negative input of operational amplifier U1. A resistor R2 (e.g., 1 kohm) is coupled between a second side of the resistor R_sense and a positive input of the operational amplifier U1. A first side of a resistor R3 (e.g., 66.5 kohms) is coupled to the negative input of the operational amplifier U1 and a second side of the resistor R3 is coupled to the power supply +V. A resistor R4 (e.g., 66.5 kohms) is coupled between the positive terminal of the operational amplifier U1 and a common ground. A resistor R5 (e.g., 47 kohms) is coupled between an output of the operational amplifier U1 and a power supply VDD. A resistor R6 (e.g., 1 kohm) is serially coupled between the output of the operational amplifier U1 and an external device, e.g., an input of a microcontroller (not shown in Fig. 2).

The resistors R1 and R3 form a voltage divider that sets a threshold Vth (which is approximately equal to +V*(R1/(R1 + R3))). The slope of a short circuit load line is approximated by the following admittance: Y = 1/R_limit. The slope of the threshold current versus the input voltage is approximately R1/(R_sense*R3). The resistors R1, R2, R3 and R4 form a differential input to the operational amplifier U1, which senses a voltage developed across the resistor R_sense as load current passes through the resistor R_sense. The resistor R5 pulls the output of the operational amplifier U1 to VDD when the output of the operational amplifier is not low. In this manner, the resistor R5 ensures that a recognized logic level is provided to an input of an external device (e.g., a microcontroller). The value of the resistor R6 is selected to provide isolation between the output of the operational amplifier U1 and the input of the external device. A capacitor C1 (e.g., 270pF) may be provided across the negative and positive inputs of the operational amplifier U1 to improve common mode rejection at high frequencies and increase immunity to external RF sources, which can initiate false over-current indications.

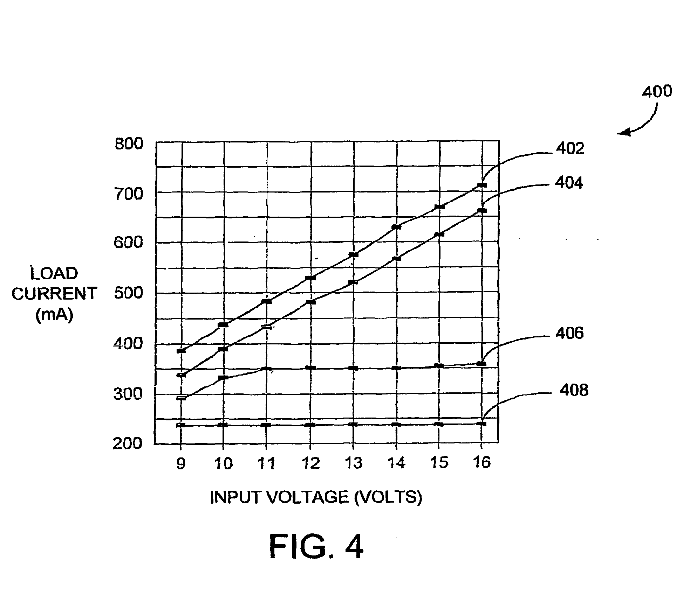

Fig. 4 depicts an exemplary graph of four curves that depict the relationship of a load current to an input voltage (i.e., a power supply voltage) for a number of conditions. A steady-state current curve 408 depicts the steady-state current when the load is not shorted, after a predetermined time period, e.g., fifteen seconds. An initial current curve 406 depicts an initial current when a load is not shorted at a predetermined time period of, for example, fifteen milliseconds. A steady-state current curve 402 depicts a steady-state current when the load R_load is shorted. A threshold curve 404 shows how the threshold Vth tracks the steady-state current curve 402 as the input voltage increases. That is, the curve 404 tracks the curve 402 and allows a short circuit condition to be detected as the input voltage provided by the power supply +V varies from nine to sixteen volts.

This allows the threshold Vth to be set above the steady-state current curve 406 while still allowing a shorted load to be detected. It should be appreciated from the graph of Fig. 4 that if a fixed threshold current of four hundred milliamperes is chosen, a short circuit condition could not be detected when the input voltage was below approximately ten volts. It should be appreciated that utilizing the current sense circuit 200 allows the drive circuit G1 to deliver a maximum current, demanded by a load, over a variable input voltage while at the same time still detecting when the load is shorted and responding in an appropriate fashion.

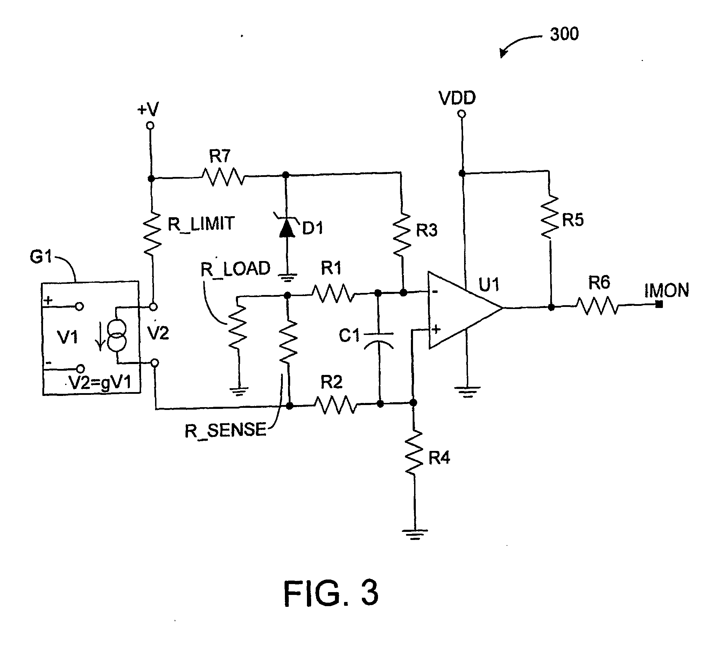

Fig. 3 shows an electrical schematic for a current sense circuit 300, according to another embodiment of the present invention. The current sense circuit 300 (of Fig. 3) is similar to the current sense circuit 200 (of Fig. 2), with the exception of an additional resistor R7 (e.g., 330 ohms) and a zener diode D1 (e.g., a twelve volt zener diode). The resistor R7 is coupled between the resistor R3 and the power supply +V. A cathode of the zener diode D1 is coupled to the second side of the resistor R3 and the anode of diode D1 is coupled to common ground. The zener diode D1 is used to limit the threshold Vth to a fixed value, below the value of the power supply +V, as the output level of the power supply +V varies. The resistor R7 serves to limit the zener current that can flow through the zener diode D 1.

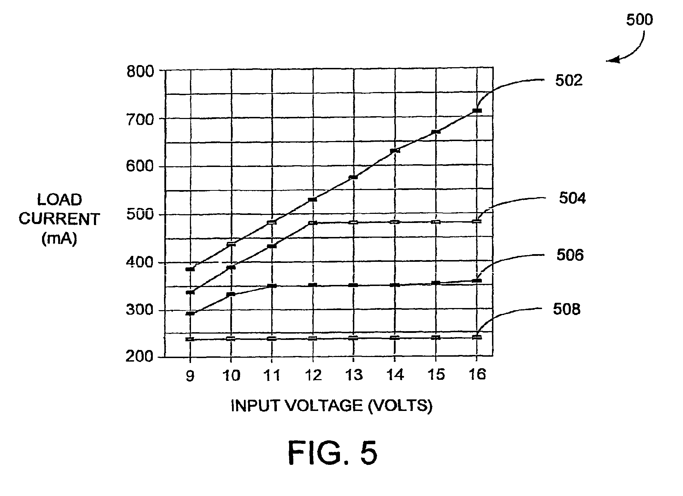

Turning to Fig. 5, an exemplary graph 500 depicts the relationship between the load current and the input voltage (i.e., a power supply voltage) for the current sense circuit 300 of Fig. 3. A steady-state current curve 508 shows the relationship between the load current and the input voltage when the load is not shorted after a predetermined time period of, for example, fifteen seconds. An initial current curve 506 shows the relationship between the load current and the input voltage when the load is not shorted at a particular point in time, for example, fifteen milliseconds after power is applied. A threshold curve 504 depicts the threshold Vth, which follows a steady-state current curve 502 until the zener diode D1 turns on at twelve volts. This provides a piecewise-linear continuous function that sets a maximum threshold Vth. It should be appreciated that by judicious selection of the resistors R1, R3 and R_sense, a current-to-voltage relationship can be developed that has essentially the same current-to-voltage characteristics as the drive circuit G1. It should also be appreciated that by properly selecting the values for the resistors R1, R3 and R_sense, other slopes can be achieved.

In at least one embodiment, an element drive circuit is provided with fault protection that is configured to detect overloads that fall slightly below the steady state current limit. In at least one embodiment, an element drive circuit is provided with fault protection that is configured to detect conditions when the load is normal and the system voltage is excessive. In at least one embodiment, an element drive circuit is provided with fault protection configured to detect overloads that fall slightly below the steady state current limit and fault protection configured to detect conditions when the load is normal and the system voltage is excessive. In at least one embodiment, a common fault protection circuit is provided to detect overloads that fall slightly below the steady state current limit and to detect conditions when the load is normal and the system voltage is excessive. In at least one embodiment, at least a portion of the fault protection is configured utilizing hardware and, or, firmware of a microcontroller.

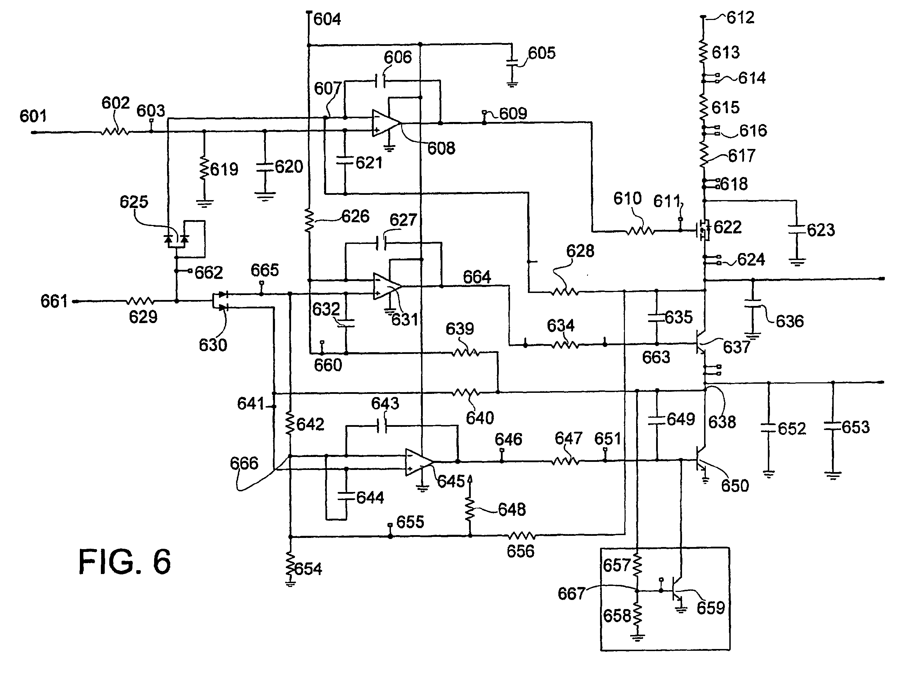

Turning now to Fig. 6, an element drive circuit is depicted comprising an outside element connection 638 with an outside element shunt protection configured to protect against faults wherein at least one outside element is inadvertently connected to a voltage source higher than a design voltage; for example, the design voltage may be approximately 1.2 volts, nominal, and an element inadvertently is shorted to a vehicle source of approximately 12 volts, nominal. In at least one embodiment, an outside element shunt protection is configured to comprise a first resistor 657 connected between terminals 638, 667, a second resistor 658 connected between terminal 667 and ground and a first transistor 659 connected as depicted in Fig. 6 between terminals 651, 667 and ground. As described in more detail elsewhere herein, at least one input to a micro controller may be configured to receive a connection to a "feed back" terminal; for example, terminals 614, 616, 618, 624, 638, any sub-combination or combination thereof. An element drive circuit may be configured with a plurality of inputs that may be compared to values representative of desired values. In at least one embodiment, fault protection is implemented in firmware using micro controller A/D channels. In at least one related embodiment, a DAC function is implemented utilizing a PWM. In at least one related embodiment, a PWM time constant is measured and, or, modeled by a micro controller to perform an actual element voltage to target voltage comparison. In at least one embodiment, a third resistor 602 is connected between terminals 601, 603. In at least one embodiment, a fourth resistor 610 is connected between terminals 609, 611. In at least one embodiment, a fifth resistor 613 is connected between terminals 612, 614. In at least one embodiment, a sixth resistor 615 is connected between terminals 614, 616. In at least one embodiment, a seventh resistor 617 is connected between terminals 616, 618. In at least one embodiment, an eighth resistor 619 is connected between terminal 603 and ground. In at least one embodiment, a ninth resistor 626 is connected between terminals 604, 660. In at least one embodiment, a tenth resistor 628 is connected between terminals 607, 624. In at least one embodiment, an eleventh resistor 629 is connected between terminals 661, 662. In at least one embodiment, a twelfth resistor 639 is connected between terminals 660, 638. In at least one embodiment, a thirteenth resistor 640 is connected between terminals 641, 638. In at least one embodiment, a fourteenth resistor 634 is connected between terminals 664, 663. In at least one embodiment, a fifteenth resistor 642 is connected between terminals 665, 655. In at least one embodiment, a sixteenth resistor 647 is connected between terminals 646, 651. In at least one embodiment, a seventeenth resistor 648 is connected between a supply voltage and terminal 655. In at least one embodiment, an eighteenth resistor 654 is connected between terminal 666 and ground. In at least one embodiment, a nineteenth resistor 656 is connected between terminals 624, 655. In at least one embodiment, a first capacitor 605 is connected between terminal 604 and ground. In at least one embodiment, a second capacitor 606 is connected between terminals 607, 609. In at least one embodiment, a third capacitor 620 is connected between terminal 603 and ground. In at least one embodiment, a fourth capacitor 621 is connected between terminals 603, 607. In at least one embodiment a fifth capacitor 623 is connected between terminal 618 and ground. In at least one embodiment, a sixth capacitor 627 is connected between terminals 660, 664. In at least one embodiment, a seventh capacitor 632 is connected between terminals 665, 660. In at least one embodiment, an eighth capacitor 635 is connected between terminals 624, 663. In at least one embodiment, a ninth capacitor 636 is connected between terminal 624 and ground. In at least one embodiment, a tenth capacitor 643 is connected between terminals 666, 646. In at least one embodiment, an eleventh capacitor 644 is connected between terminals 641, 666. In at least one embodiment, a twelfth capacitor 649 is connected between terminals 638, 651. In at least one embodiment, a thirteenth capacitor 652 is connected between terminal 638 and ground. In at least one embodiment, a fourteenth capacitor 653 is connected between terminal 638 and ground. In at least one embodiment, a second transistor 637 is connected as shown between terminals 624, 663, and 638. In at least one embodiment, a third transistor 650 is connected as shown between terminals 638, 651 and ground. In at least one embodiment, a first dual diode 625 is connected as shown between terminals, 607, 662. In at least one embodiment, a second dual diode 630 is connected as shown between terminals 662, 665, and 641. In at least one embodiment, a first operational amplifier 608 is connected as shown between terminals 607, 609, 604, 603 and ground. In at least one embodiment, a second operational amplifier 631 is connected as shown between terminals 660, 665, 604, 664 and ground. In at least one embodiment, a third operational amplifier 645 is connected as shown between terminals 641, 666, 604, 646 and ground. In at least one embodiment, an element drive transistor 622 is connected as shown between terminals 611, 618, and 624. In at least one embodiment, terminal 601 is configured as a pulse width modulated signal connection representative of a desired element voltage. In at least one related embodiment a pulse width modulated signal is provided from a micro controller. In at least one embodiment, terminal 661 is configured as an element clear signal connection representative of a desired element clear state. In at least one related embodiment a clear signal is provided from a micro controller. In at least one embodiment, at least one element is connected to terminal 624. In at least one embodiment, at least one element is connected to terminal 638.

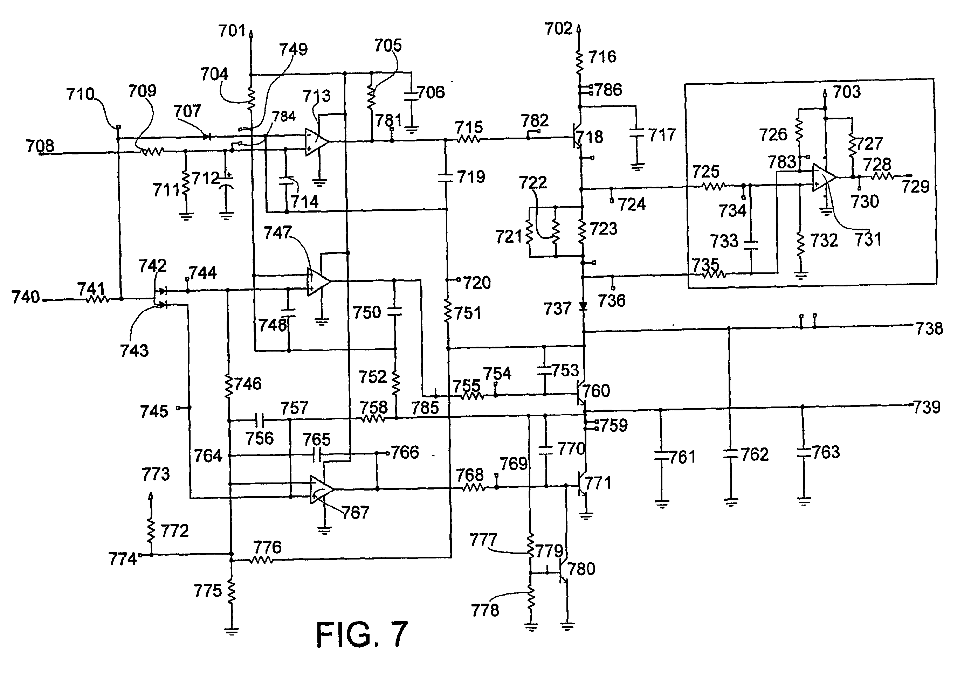

Turning now to Fig. 7, an element drive circuit is depicted comprising an outside element connection 739 with an outside element shunt protection configured to protect against faults wherein at least one outside element is inadvertently connected to a voltage source higher than a design voltage; for example, the design voltage may be approximately 1.2 volts, nominal, and an element inadvertently is shorted to a vehicle source of approximately 12 volts, nominal. In at least one embodiment, an outside element shunt protection is configured to comprise a first resistor 777 connected between terminals 739, 779, a second resistor 778 connected between terminal 779 and ground and a first transistor 780 connected as depicted in Fig. 7 between terminals 769, 779 and ground. As described in more detail elsewhere herein, at least one input to a micro controller may be configured to receive a connection to a "feed back" terminal; for example, terminals 786, 724, 736, 738, 739, 769, any sub-combination or combination thereof. An element drive circuit may be configured with a plurality of inputs that may be compared to values representative of desired values. In at least one embodiment, fault protection is implemented in firmware using micro controller A/D channels. In at least one related embodiment, a DAC function is implemented utilizing a PWM. In at least one related embodiment, a PWM time constant is measured and, or, modeled by a micro controller to perform an actual element voltage to target voltage comparison. In at least one embodiment, a comparator is connected to terminals 724, 736; alternate embodiments may be to connect to terminals 702, 786 or terminals 786, 738, for example. As can be seen, an embodiment of a comparator comprises third resistor 725 connected between terminals 724, 734; a fourth resistor 726 connected between terminals 703, 783; a fifth resistor 727 connected between terminals 703, 730; a sixth resistor 728 connected between terminals 730, 729; a seventh resistor 732 connected between terminal 734 and ground; an eighth resistor 735 connected between terminals 736, 783; a first capacitor 733 connected between terminals 734, 783; and a first operational amplifier 731 connected as shown between terminals 734, 783, 703, 730 and ground. In at least one embodiment, terminal 729 is configured as an element drive current monitor connection. In at least one embodiment, the element drive current monitor is provided as an input to a micro controller. In at least one embodiment, element over voltage and element current fault protection are provided. In at least one embodiment, both element over voltage and element current fault protection are configured as inputs to a micro controller. In at least one embodiment, a comparator output informs a micro controller that a fault has occurred. In at least one embodiment, after a time delay, approximately 400ms in at least one embodiment, the micro controller turns off the element drive circuit to allow the series resistor(s) and element drive transistor to cool. In at least one embodiment, after a time delay, in at least one embodiment an additional time delay, approximately 4s in at least one embodiment, the element drive circuit is re-enabled. In at least one embodiment, an element drive circuit is configured to continue this cycle until the fault clears; in other embodiments, an indicator will be actuated and the element drive circuit will be disabled until the fault is cleared. In at least one embodiment, a ninth resistor 704 is connected between terminals 701, 749. In at least one embodiment, a tenth resistor 705 is connected between terminals 701, 781. In at least one embodiment, an eleventh resistor 709 is connected between terminals 708, 784. In at least one embodiment, a twelfth resistor 711 is connected between terminal 784 and ground. In at least one embodiment, a thirteenth resistor 715 is connected between terminals 781, 782. In at least one embodiment, a fourteenth resistor 716 is connected between terminals 702, 786. In at least one embodiment, a fifteenth resistor 721 resistor is connected between terminals 724, 736. In at least one embodiment, a sixteenth resistor 722 is connected between terminals 724, 736. In at least one embodiment, a seventeenth resistor 723 is connected between terminals 724, 736. In at least one embodiment, an eighteenth resistor 741 is connected between terminals 740, 710. In at least one embodiment, a nineteenth resistor 746 is connected between terminals 744, 764. In at least one embodiment, a twentieth resistor 751 is connected between terminals 720, 738. In at least one embodiment, a twenty-first resistor 752 is connected between terminals 749, 759. In at least one embodiment, a twenty-second resistor 755 is connected between terminals 785, 754. In at least one embodiment, a twenty-third resistor 758 is connected between terminals 757, 759. In at least one embodiment, a twenty-fourth resistor 768 is connected between terminals 766, 769. In at least one embodiment, a twenty-fifth resistor 772 is connected between terminals 773, 774. In at least one embodiment, a twenty-sixth resistor 775 is connected between terminal 776 and ground. In at least one embodiment, a twenty-seventh resistor 776 is connected between terminals 764, 738. In at least one embodiment, a second capacitor 706 is connected between terminal 701 and ground. In at least one embodiment, a third capacitor 712 is connected between terminal 784 and ground. In at least one embodiment, a fourth capacitor 714 is connected between terminals 784, 720. In at least one embodiment a fifth capacitor 717 is connected between terminal 786 and ground. In at least one embodiment, a sixth capacitor 719 is connected between terminals 781, 720. In at least one embodiment, a seventh capacitor 748 is connected between terminals 749, 744. In at least one embodiment, an eighth capacitor 750 is connected between terminals 749, 785. In at least one embodiment, a ninth capacitor 753 is connected between terminals 738, 754. In at least one embodiment, a tenth capacitor 756 is connected between terminals 757, 764. In at least one embodiment, an eleventh capacitor 761 is connected between terminal 739 and ground. In at least one embodiment, a twelfth capacitor 762 is connected between terminal 739 and ground. In at least one embodiment, a thirteenth capacitor 763 is connected between terminal 739 and ground. In at least one embodiment, a fourteenth capacitor 765 is connected between terminals 764, 766. In at least one embodiment, a fifteenth capacitor 770 is connected between terminals 739, 769. In at least one embodiment, a second transistor 760 is connected as shown between terminals 738, 759, and 754. In at least one embodiment, a third transistor 771 is connected as shown between terminals 759, 769 and ground. In at least one embodiment, a first diode 707 is connected as shown between terminals 710, 720. In at least one embodiment, a second diode 742 is connected as shown between terminals 710, 745. In at least one embodiment, a third diode 743 is connected as shown between terminals 710, 745. In at least one embodiment, a fourth diode 737 is connected as shown between terminals 736, 738. In at least one embodiment, a second operational amplifier 713 is connected as shown between terminals 749, 784, 701, 781 and ground. In at least one embodiment, a third operational amplifier 747 is connected as shown between terminals 749, 744, 701, 785 and ground. In at least one embodiment, a fourth operational amplifier 767 is connected as shown between terminals 764, 745, 701, 766 and ground. In at least one embodiment, an element drive transistor 718 is connected as shown between terminals 786, 782, and 724. In at least one embodiment, terminal 708 is configured as a pulse width modulated signal connection representative of a desired element voltage. In at least one related embodiment a pulse width modulated signal is provided from a micro controller. In at least one embodiment, terminal 740 is configured as an element clear signal connection representative of a desired element clear state. In at least one related embodiment a clear signal is provided from a micro controller. In at least one embodiment, at least one element is connected to terminal 738. In at least one embodiment, at least one element is connected to terminal 739.

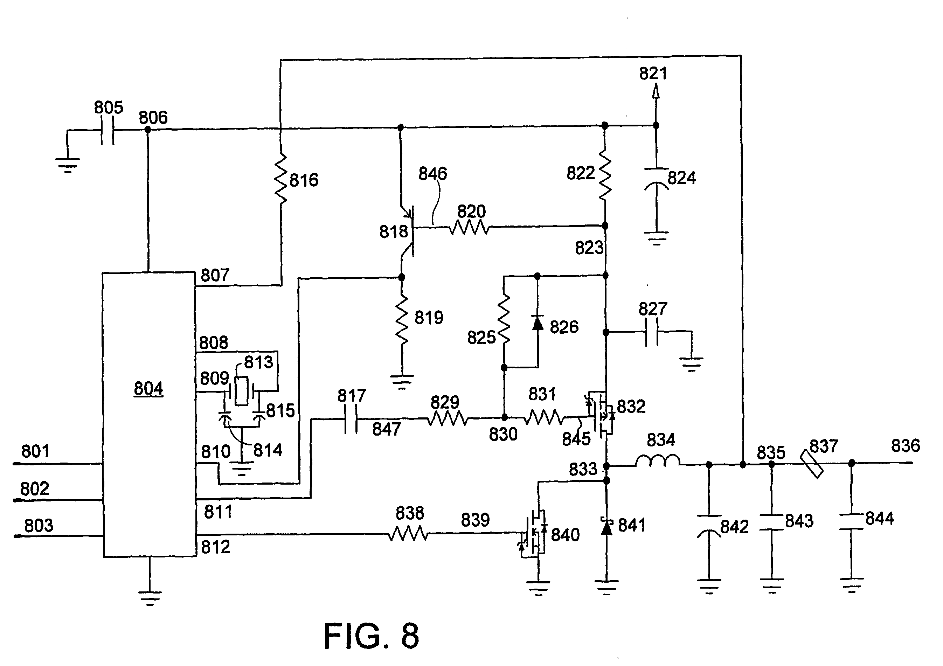

With reference to Fig. 8, an element drive circuit is shown with actual element voltage feedback. In at least one embodiment, the actual element voltage feedback is provided via a first resistor 816 connected between terminals 835, 807. In at least one embodiment, actual element current feedback is provided. In at least one embodiment, actual element current feedback is provided via terminal 810. In at least one embodiment, the actual element voltage feedback is configured as an input to a micro controller 804. In at least one embodiment, the actual element current feedback is configured as an input to a micro controller. In at least one embodiment, both the actual element current and voltage are provided as inputs to a micro controller 804. In at least one embodiment, terminal 836 is configured as an element connection. In at least one embodiment, an element drive transistor 832 is connected as shown between terminals 823, 833, and 845. In at least one embodiment, an actual element current feedback is configured with a first transistor 818 connected as shown between terminals 806, 810, 846; a second resistor 819 connected between terminal 810 and ground; and a third resistor 820 connected between terminals 846, 823. In at least one embodiment, an actual element current feedback is configured to detect a voltage drop across a "dropping resistor," fourth resistor 822 connected between terminals 806, 823. In at least one embodiment, a fifth resistor 825 is connected between terminals 823, 830. In at least one embodiment, a sixth resistor 829 is connected between terminals 847, 830. In at least one embodiment, a seventh resistor 831 is connected between terminals 830, 845. In at least one embodiment, an eighth resistor 838 is connected between terminals 812, 839. In at least one embodiment, terminal 812 is configured as an output of a microcontroller to "short circuit" at least one element, this provides element protection, element control, element clearing, a sub-combination thereof or a combination thereof. In at least one embodiment, an oscillator clock circuit is configured with a second capacitor 814 connected between terminal 809 and ground, a third capacitor 815 connected between terminal 808 and ground and a coil 813 connected between terminals 808, 809. In at least one embodiment, an oscillator clock circuit is connected to a micro controller 804 as shown with terminals 808, 809. In at least one embodiment, a first capacitor 805 is connected between terminal 806 and ground. In at least one embodiment, terminal 806 is connected to terminal 821 defining a power supply connection. In at least one embodiment, a fourth capacitor 817 is connected between terminals 811, 847. In at least one embodiment, a fifth capacitor 824 is connected between terminal S21 and ground. In at least one embodiment, a sixth capacitor 827 is connected between terminal 823 and ground. In at least one embodiment, a seventh capacitor 842 is connected between terminal 835 and ground. In at least one embodiment, an eighth capacitor 843 is connected between terminal 835 and ground. In at least one embodinent, a ninth capacitor 844 is connected between terminal 836 and ground. In at least one embodiment, a choke 837 is connected between terminals 835, 836. In at least one embodiment, an inductor 834 is connected between terminals 833, 835. In at least one embodiment, a diode 826 is connected between terminals 823, 830. In at least one embodiment, a Schottky diode 841 is connected between terminal 833 and ground. In at least one embodiment, a terminal 801 is configured as a communication connection to a micro controller 804. In at least one embodiment, a micro controller 804 is configured to receive an ambient light signal on a terminal 802. In at least one embodiment, a micro controller 804 is configured to receive a glare light signal on a terminal S03. In at least one embodiment, a micro controller is configured with a ground connection.

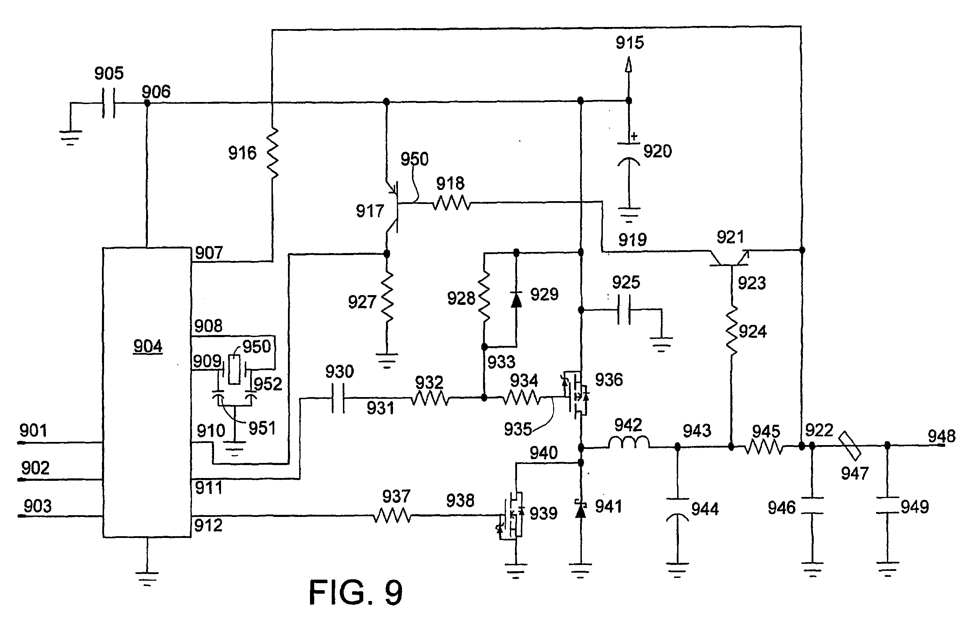

Fig. 9 depicts an element drive circuit with actual element voltage feedback. In at least one embodiment, the actual element voltage feedback is provided via a first resistor 916 connected between terminals 907, 922. In at least one embodiment, actual element current feedback is provided. In at least one embodiment, actual element current feedback is provided via terminal 910. In at least one embodiment, the actual element voltage feedback is configured as an input to a micro controller 904. In at least one embodiment, the actual element current feedback is configured as an input to a micro controller. In at least one embodiment, both the actual element current and voltage are provided as inputs to a micro controller 904. In at least one embodiment, terminal 948 is configured as an element connection. In at least one embodiment, an element drive transistor 936 is connected as shown between terminals 906, 935, and 940. In at least one embodiment, an actual element current feedback is configured with a first transistor 917 connected as shown between terminals 906, 950, 910; a second resistor 927 connected between terminal 910 and ground; a third resistor 918 connected between terminals 950, 919; a second transistor 921 connected as shown between terminals 919, 922, 923; and a ninth resistor 924 connected between terminals 923, 943. In at least one embodiment, an actual element current feedback is configured to detect a voltage drop across a "dropping resistor," fourth resistor 945 connected between terminals 943, 922. In at least one embodiment, a fifth resistor 928 is connected between terminals 906, 933. In at least one embodiment, a sixth resistor 932 is connected between terminals 931, 933. In at least one embodiment, a seventh resistor 934 is connected between terminals 933, 935. In at least one embodiment, an eighth resistor 937 is connected between terminals 912, 938. In at least one embodiment, terminal 912 is configured as an output of a microcontroller to "short circuit" at least one element, this provides element protection, element control, element clearing, a sub-combination thereof or a combination thereof. In at least one embodiment, an oscillator clock circuit is configured with a second capacitor 951 connected between terminal 909 and ground, a third capacitor 952 connected between terminal 908 and ground and a coil 950 is connected between terminals 908, 909. In at least one embodiment, an oscillator clock circuit is connected to a micro controller 904 as shown with terminals 908, 909. In at least one embodiment, a first capacitor 905 is connected between terminal 906 and ground. In at least one embodiment, terminal 906 is connected to terminal 915 defining a power supply connection. In at least one embodiment, a fourth capacitor 930 is connected between terminals 911, 931. In at least one embodiment, a fifth capacitor 920 is connected between terminal 915 and ground. In at least one embodiment, a sixth capacitor 925 is connected between terminal 915 and ground. In at least one embodiment, a seventh capacitor 944 is connected between terminal 943 and ground. In at least one embodiment, an eighth capacitor 946 is connected between terminal 922 and ground. In at least one embodiment, a ninth capacitor 949 is connected between terminal 948 and ground. In at least one embodiment, a choke 947 is connected between terminals 922, 948. In at least one embodiment, an inductor 942 is connected between terminals 940, 943. In at least one embodiment, a diode 929 is connected between terminals 915, 933. In at least one embodiment, a Schottky diode 941 is connected between terminal 940 and ground. In at least one embodiment, a terminal 901 is configured as a communication connection to a micro controller 904. In at least one embodiment, a micro controller 904 is configured to receive an ambient light signal on a terminal 902. In at least one embodiment, a micro controller 804 is configured to receive a glare light signal on a terminal 903. In at least one embodiment, a micro controller is configured with a ground connection.

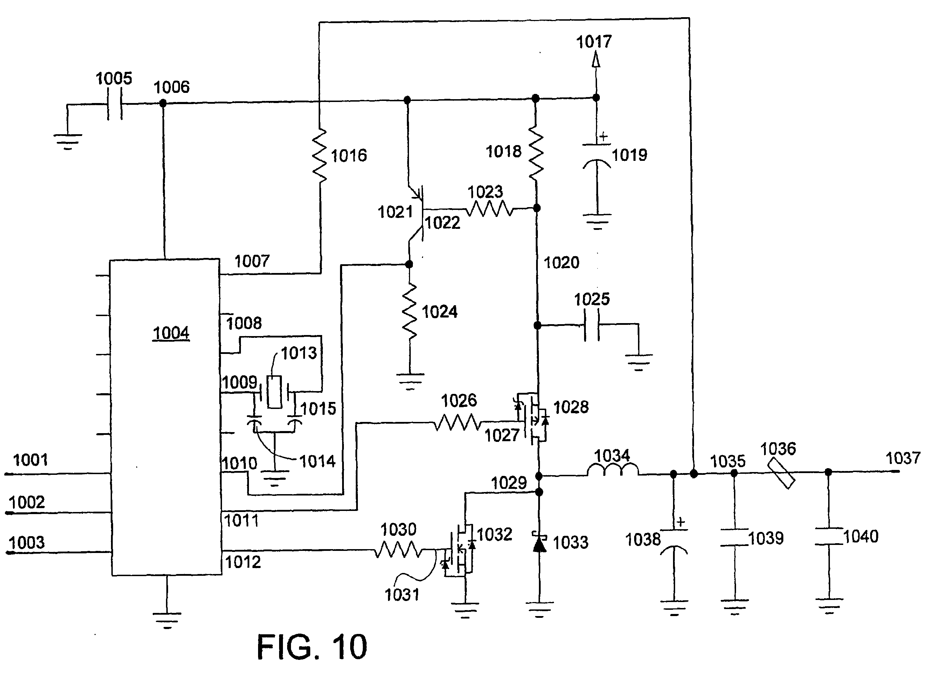

Turning to Fig. 10, an element drive circuit is shown with actual element voltage feedback. In at least one embodiment, the actual element voltage feedback is provided via a first resistor 1016 connected between terminals 1007, 1035. In at least one embodiment, actual element current feedback is provided. In at least one embodiment, actual element current feedback is provided via terminal 1010. In at least one embodiment, the actual element voltage feedback is configured as an input to a micro controller 1004. In at least one embodiment, the actual element current feedback is configured as an input to a micro controller. In at least one embodiment, both the actual element current and voltage are provided as inputs to a micro controller 1004. In at least one embodiment, terminal 1037 is configured as an element connection. In at least one embodiment, an element drive transistor 1028 is connected as shown between terminals 1020, 1027 1029. In at least one embodiment, an actual element current feedback is configured with a first transistor 1021 connected as shown between terminals 1006, 1010, 1022; a second resistor 1024 connected between terminal 1010 and ground; and a third resistor 1023 connected between terminals 1022, 1020. In at least one embodiment, an actual element current feedback is configured to detect a voltage drop across a "dropping resistor," fourth resistor 1018 connected between terminals 1006, 1020. In at least one embodiment, a sixth resistor 1026 is connected between terminals 1011, 1027. In at least one embodiment, an eighth resistor 1030 is connected between terminals 1012, 1031. In at least one embodiment, terminal 1012 is configured as an output of a microcontroller to "short circuit" at least one element, this provides element protection, element control, element clearing, a sub-combination thereof or a combination thereof. In at least one embodiment, an oscillator clock circuit is configured with a second capacitor 1014 connected between terminal 1009 and ground, a third capacitor 1015 connected between terminal 1008 and ground and a coil 1013 connected between terminals 1008, 1009. In at least one embodiment, an oscillator clock circuit is connected to a micro controller 1004 as shown with terminals 1008, 1009. In at least one embodiment, a first capacitor 1005 is connected between terminal 1006 and ground. In at least one embodiment, terminal 1006 is connected to terminal 1017 defining a power supply connection. In at least one embodiment, a fifth capacitor 1019 is connected between terminal 1017 and ground. In at least one embodiment, a sixth capacitor 1025 is connected between terminal 1020 and ground. In at least one embodiment, a seventh capacitor 1038 is connected between terminal 1035 and ground. In at least one embodiment, an eighth capacitor 1039 is connected between terminal 1035 and ground. In at least one embodiment, a ninth capacitor 1040 is connected between terminal 1037 and ground. In at least one embodiment, a choke 1036 is connected between terminals 1035, 1037. In at least one embodiment, an inductor 1034 is connected between terminals 1029, 1035. In at least one embodiment, a Schottky diode 1033 is connected between terminal 1029 and ground. In at least one embodiment, a terminal 1001 is configured as a communication connection to a micro controller 1004. In at least one embodiment, a micro controller 1004 is configured to receive an ambient light signal on a terminal 1002. In at least one embodiment, a micro controller 1004 is configured to receive a glare light signal on a terminal 1003. In at least one embodiment, a micro controller is configured with a ground connection.

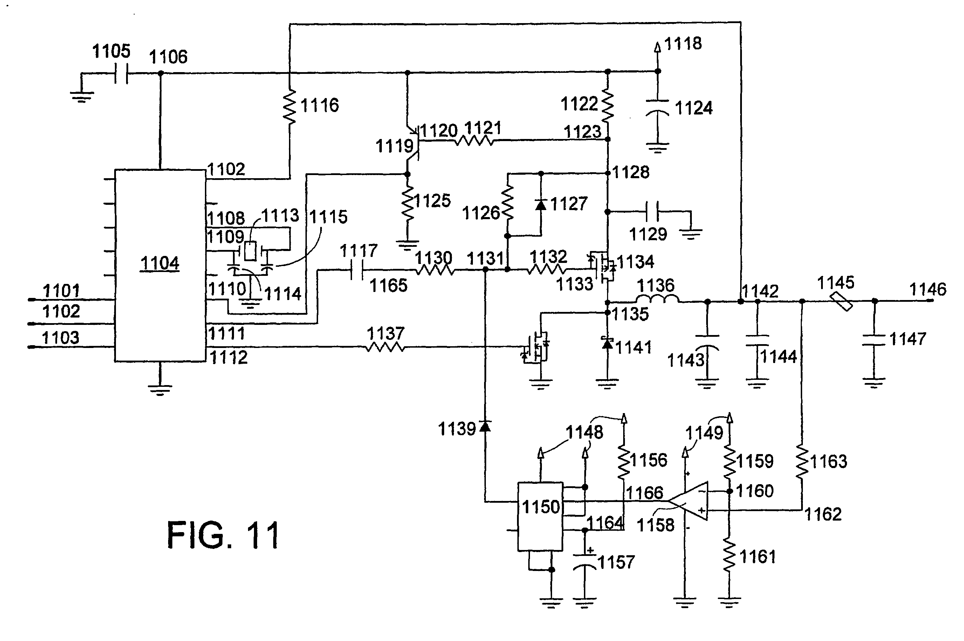

With reference to Fig. 11, an element drive circuit is shown with actual element voltage feedback. In at least one embodiment, the actual element voltage feedback is provided via a first resistor 1116 connected between terminals 1142, 1102. In at least one embodiment, actual element current feedback is provided. In at least one embodiment, actual element current feedback is provided via terminal 1110. In at least one embodiment, the actual element voltage feedback is configured as an input to a micro controller 1104. In at least one embodiment, the actual element current feedback is configured as an input to a micro controller. In at least one embodiment, both the actual element current and voltage are provided as inputs to a micro controller 1104. In at least one embodiment, terminal 1146 is configured as an element connection. In at least one embodiment, an element drive transistor 1134 is connected as shown between terminals 1128, 1133, 1135. In at least one embodiment, an actual element current feedback is configured with a first transistor 1119 connected as shown between terminals 1106, 1110, 1120; a second resistor 1125 connected between terminal 1110 and ground; and a third resistor 1121 connected between terminals 1120, 1123. In at least one embodiment, an actual element current feedback is configured to detect a voltage drop across a "dropping resistor," fourth resistor 1122 connected between terminals 1106, 1123. In at least one embodiment, a fifth resistor 1126 is connected between terminals 1128, 1131. In at least one embodiment, a sixth resistor 1130 is connected between terminals 1165, 1131. In at least one embodiment, a seventh resistor 1132 is connected between terminals 1131, 1133. In at least one embodiment, an eighth resistor 1137 is connected between terminals 1112, 1138. In at least one embodiment, terminal 1112 are configured as an output of a microcontroller to "short circuit" at least one element, this provides element protection, element control, element clearing, a sub-combination thereof or a combination thereof. In at least one embodiment, an oscillator clock circuit is configured with a second capacitor 1114 connected between terminal 1109 and ground, a third capacitor 1115 connected between terminal 1108 and ground and a coil 1113 connected between terminals 1108, 1109. In at least one embodiment, an oscillator clock circuit is connected to a micro controller 1104 as shown with terminals 1108, 1109. In at least one embodiment, a first capacitor 1105 is connected between terminal 1106 and ground. In at least one embodiment, terminal 1106 is connected to terminal 1118 defining a power supply connection. In at least one embodiment, a fourth capacitor 1117 is connected between terminals 1111, 1165. In at least one embodiment, a fifth capacitor 1124 is connected between terminal 1118 and ground. In at least one embodiment, a sixth capacitor 1129 is connected between terminal 1128 and ground. In at least one embodiment, a seventh capacitor 1143 is connected between terminal 1142 and ground. In at least one embodiment, an eighth capacitor 1144 is connected between terminal 1142 and ground. In at least one embodiment, a ninth capacitor 1147 is connected between terminal 1146 and ground. In at least one embodiment, a choke 1145 is connected between terminals 1142, 1146. In at least one embodiment, an inductor 1136 is connected between terminals 1135, 1142. In at least one embodiment, a diode 1127 is connected between terminals 1128, 1131. In at least one embodiment, a schottky diode 1141 is connected between terminal 1135 and ground. In at least one embodiment, a terminal 1101 is configured as a communication connection to a micro controller 1104. In at least one embodiment, a micro controller 1104 is configured to receive an ambient light signal on a terminal 1102. In at least one embodiment, a micro controller 1104 is configured to receive a glare light signal on a terminal 1103. In at least one embodiment, a micro controller is configured with a ground connection. In at least one embodiment, the voltage across an element drive transistor is measured. In at least one embodiment, an element drive transistor voltage drop multiplied by a voltage drop across at least one dropping resistor is proportional to the power dissipation in the element drive transistor. In at least one embodiment, a limit is placed on the drive transistor power dissipation. In at least one related embodiment, fault protection for "soft shorts" or overloads that occur at high vehicle bus voltages are detectable. In at least one embodiment, power limits for an element drive transistor and, or, at least one dropping resistor may be fixed, or calibrated constants stored in EEPROM. In at least one embodiment, thermal time constants of an element drive transistor and, or, at least one dropping resistor are modeled to further adapt the power limits. Corresponding limits may be adjusted as a function of ambient temperature in systems having temperature available as an input. In at least one embodiment, an integrated circuit 1150 is connected as shown between terminals 1139, 1148, 1166, 1164 and ground. In at least one embodiment, a tenth capacitor 1157 is connected between terminal 1164 and ground. In at least one embodiment, a ninth resistor 1156 is connected between terminals 1148, 1164. In at least one embodiment, an operational amplifier is connected as shown between terminals 1166, 1149, 1160, 1162 and ground. In at least one embodiment, a tenth resistor 1159 is connected between terminals 1149, 1160. In at least one embodiment, an eleventh resistor 1161 is connected between terminal 1160 and ground. In at least one embodiment, a twelve resistor is connected between terminals 1142, 1162. In at least one embodiment, terminals 1148, 1149 are connected and form a power supply connection.

It should be understood that any of the fault protection circuits described herein may be used in combination with class-D element drive circuits, switching element drive circuits, linear element drive circuits, analog element drive circuits and digital drive circuits. It should be understood that current may be sensed via a resistor, current sensing MOSFET (IR Sensefet or equivalent) or current transformer. It may be desirable to adjust the current limit threshold as a function of input voltage. In at least one embodiment, an element drive circuit is protected against micro controller crash as shown in Fig. 10. It should be understood that other methods, in addition to those described herein, such as missing pulse detectors may also be used for fault detection.

Accordingly, element drive circuits with fault protection have been described herein. In at least one embodiment, an element drive circuit is provided with a variable threshold that changes in response to a voltage level of a power supply, which provides drive current to a load. It should be appreciated that at least portions of the current sense circuits, as described herein, can generally be embodied in forms other than discrete devices, e.g., a control circuit, such as a programmed microcontroller, a programmed microprocessor, an application specific integrated circuit, combinations thereof, subcombinations thereof, etc.

The above description is considered that of the preferred embodiments only. Modification of the invention will occur to those skilled in the art and to those who make or use the invention. Therefore, it is understood that the embodiments shown in the drawings and described above are merely for illustrative purposes and not intended to limit the scope of the invention, which is defined by the following claims.

## Claims

1. A mirror control system (100) that detects a fault condition for use with an electrochromic element (108), comprising:
a power supply (114);
a drive circuit (112) which is coupled to and which receives power from the power supply (114); **characterised by**
a current sense device (102, 200, 300) which is coupled to the electrochromic element (108);
a voltage sense device (104) coupled across the current sense device (102);
a variable threshold circuit (110) for providing a variable threshold signal to the voltage sense device (104) that varies as a function of the output voltage level of the power supply (114);
a control unit (106) coupled to the voltage sense device (104) and the drive circuit (112) configured to receive an actual element voltage signal, an actual element current signal and an element drive transistor power dissipation signal, said control unit (106) is further configured to detect a fault condition by comparing said actual element voltage signal to a desired voltage value, comparing said actual element current to a desired current value, comparing said element drive transistor power dissipation signal to a maximum power value, a sub-combination thereof or a combination thereof.

2. A mirror control system (100) as in claim 1, wherein said mirror control system (100) is temporarily disabled when a fault is detected for a period of time.

3. A mirror control system (100) as in claim 2 wherein said period of time is approximately 1.0 second or less.

4. A mirror control system (100) as in claim 2 wherein said period of time is approximately 400ms.

5. A mirror control system (100) as in claim 2 wherein said mirror control system (100) is disabled for a second period of time prior to being automatically enabled.

6. A mirror control system (100) as in claim 5 wherein said second period of time is greater than approximately 2 seconds.

7. A mirror control system (100) as in claim 5 wherein said second period of time is approximately 4 seconds.

8. A mirror control system (100) as in claim 1, wherein said control unit (106) is configured as a micro controller.

9. A mirror control system (100) as in claim 1, configured as one of the devices selected from a group comprising: class-D element drive circuits, switching element drive circuits, linear element drive circuits, analog element drive circuits and digital drive circuits.

## Patentansprüche

1. Spiegelsteuer- bzw. -regelsystem (100), das eine Fehlerbedingung detektiert, zur Verwendung mit einem elektrochromen Element (108), umfassend:
eine Leistungsversorgung (114);
eine Treiberschaltung (112), die mit der Leistungsversorgung (114) gekoppelt ist und von dieser Leistung empfängt;
**gekennzeichnet durch**
eine Stromerfassungsvorrichtung (102, 200, 300), die mit dem elektrochromen Element (108) gekoppelt ist;
eine Spannungserfassungsvorrichtung (104), die über der bzw. die Stromerfassungsvorrichtung (102) gekoppelt ist;
eine Variabler-Schwellenwert-Schaltung (110) zum Bereitstellen eines Variabler-Schwellenwert-Signals an die Spannungserfassungsvorrichtung (104),
das als eine Funktion des Ausgangsspannungspegels der Leistungsversorgung (114) variiert;
eine Steuer- bzw. Regeleinheit (106), die mit der Spannungserfassungsvorrichtung (104) und der Treiberschaltung (112) gekoppelt ist, konfiguriert, ein tatsächliches Elementspannungssignal, ein tatsächliches Elementstromsignal und ein Elementtreibertransistorverlustleistungssignal zu empfangen, wobei die Steuer- bzw. Regeleinheit (106) ferner konfiguriert ist, eine Fehlerbedingung zu detektieren **durch** Vergleichen des tatsächlichen Elementspannungssignals mit einem gewünschten Spannungswert, Vergleichen des tatsächlichen Elementstroms mit einem gewünschten Stromwert, Vergleichen des Elementtreibertransistorverlustleistungssignals mit einem maximalen Leistungswert, einer Unterkombination davon oder einer Kombination davon.

2. Spiegelsteuer- bzw. -regelsystem (100) nach Anspruch 1, wobei das Spiegelsteuer- bzw. -regelsystem (100), wenn ein Fehler detektiert wird, temporär für einen Zeitraum deaktiviert wird

3. Spiegelsteuer- bzw. -regelsystem (100) nach Anspruch 2, wobei der Zeitraum näherungsweise 1,0 Sekunden2 oder weniger ist.

4. Spiegelsteuer- bzw. -regelsystem (100) nach Anspruch 2, wobei der Zeitraum näherungsweise 400 ms ist.

5. Spiegelsteuer- bzw. -regelsystem (100) nach Anspruch 2, wobei das Spiegelsteuer- bzw. -regelsystem (100) für einen zweiten Zeitraum deaktiviert wird, bevor es automatisch aktiviert wird.

6. Spiegelsteuer- bzw. -regelsystem (100) nach Anspruch 5, wobei der zweite Zeitraum größer als näherungsweise 2 Sekunden ist.

7. Spiegelsteuer- bzw. -regelsystem (100) nach Anspruch 5, wobei der zweite Zeitraum näherungsweise 4 Sekunden ist.

8. Spiegelsteuer- bzw. -regelsystem (100) nach Anspruch 1, wobei die Steuer- bzw. Regeleinheit (106) als ein Mikrocontroller konfiguriert ist.

9. Spiegelsteuer- bzw. -regelsystem (100) nach Anspruch 1, konfiguriert als eine der Vorrichtungen, die aus der Gruppe ausgewählt sind, die umfasst: Klasse-D-Elementtreiberschaltungen, Schaltelementtreiberschaltungen, Linearelementtreiberschaltungen, Analogelementtreiberschaltungen und Digitaltreiberschaltungen.

## Revendications

1. Système de commande de rétroviseur (100) qui détecte une condition de panne destiné à être utilisé avec un élément électrochromique (108), comprenant :
une alimentation électrique (114) ;
un circuit d'entraînement (112) qui est raccordé à et qui reçoit de la puissance de l'alimentation électrique (114) ; **caractérisé par**
un dispositif de détection de courant (102, 200, 300) qui est raccordé à l'élément électrochromique (108) ;
un dispositif de détection de tension (104) raccordé en travers du dispositif de détection de courant (102) ;
un circuit à seuil variable (110) pour fournir un signal à seuil variable au dispositif de détection de tension (104) qui varie en fonction du niveau de tension de sortie de l'alimentation électrique (114) ;
un module de commande (106) raccordé au dispositif de détection de tension (104) et au circuit d'entraînement (112) configuré pour recevoir un signal de tension d'élément réel, un signal de courant d'élément réel et un signal de dissipation de puissance de transistor d'entraînement d'élément, ledit module de commande (106) étant en outre configuré pour détecter une condition de panne en comparant ledit signal de tension d'élément réel à une valeur de tension souhaitée, en comparant ledit courant d'élément réel à une valeur de courant souhaitée, en comparant ledit signal de dissipation de puissance de transistor d'entraînement d'élément à une valeur de puissance maximale, une combinaison secondaire de ceux-ci ou une combinaison de ceux-ci.

2. Système de commande de rétroviseur (100) selon la revendication 1, dans lequel ledit système de commande de rétroviseur (100) est temporairement désactivé lorsqu'une panne est détectée pendant une période de temps.

3. Système de commande de rétroviseur (100) selon la revendication 2, dans lequel ladite période de temps est d'environ 1,0 seconde ou moins.

4. Système de commande de rétroviseur (100) selon la revendication 2, dans lequel ladite période de temps est d'environ 400 ms.

5. Système de commande de rétroviseur (100) selon la revendication 2, dans lequel ledit système de commande de rétroviseur (100) est désactivé pendant une seconde période de temps avant d'être automatiquement activé.

6. Système de commande de rétroviseur (100) selon la revendication 5, dans lequel ladite seconde période de temps est supérieure à environ 2 secondes.

7. Système de commande de rétroviseur (100) selon la revendication 5, dans lequel ladite seconde période de temps est d'environ 4 secondes.

8. Système de commande de rétroviseur (100) selon la revendication 1, dans lequel ledit module de commande (106) est configuré en tant que microcontrôleur.

9. Système de commande de rétroviseur (100) selon la revendication 1, configuré en tant qu'un des dispositifs sélectionnés parmi un groupe comprenant : des circuits d'entraînement d'élément de classe D, des circuits d'entraînement d'élément de commutation, des circuits d'entraînement d'élément linéaire, des circuits d'entraînement d'élément analogique et des circuits d'entraînement numériques.
